# EUROPÄISCHE PATENTSCHRIFT

(11) **EP 0 846 145 B1**
(45) Veröffentlichungstag und Bekanntmachung des Hinweises auf die Patenterteilung: **07.01.1999**
(21) Anmeldenummer: 96929119.4
(22) Anmeldetag: 23.08.1996
(51) Int. Cl.: C08L 97/00, B65D 65/46, A01N 25/34

(54) **WASSERLÖSLICHE THERMOPLASTISCHE FORMMASSE AUF BASIS VON LIGNINSULFONATEN**
WATER SOLUBLE THERMOPLASTIC MOULDING COMPOSITION BASED ON LIGNIN SULFONATES
COMPOSITION DE MOULAGE THERMOPLASTIQUE SOLUBLE A L'EAU A BASE DE SULFONATES DE LIGNIN

(30) Priorität: 24.08.1995 AT 1430/95
(43) Veröffentlichungstag der Anmeldung: 10.06.1998
(73) Patentinhaber: F. JOH. KWIZDA GESELLSCHAFT M.B.H., 1011 WIEN (AT)
(72) Erfinder: RAUCH, Andreas, A-1220 Wien (AT); TIEFENBACHER, Karl, A-1170 Wien (AT); ZSIFKOVITS, Wilhelm, A-2100 Korneuburg (AT)
(74) Vertreter: Pawloy, Peter Michael, Dipl.-Ing.
(86) Internationale Anmeldenummer: AT9600154
(87) Internationale Veröffentlichungsnummer: WO9708244

(56) Entgegenhaltungen:
- WO-A-91/17199
- DE-A- 4 331 747
- FR-A- 2 672 296
- JOURNAL OF APPLIED POLYMER SCIENCE, Bd. 37, Nr. 8, 1989, NY, USA, Seiten 2399-2415, XP000087720 T. G. RIALS ET AL.: "Multiphase Materials with Lignin. IV. Blends of Hydroxypropyl Cellulose with Lignin"

## Beschreibung

Die vorliegende Erfindung betrifft eine wasserlösliche bzw. -dispergierbare thermoplastische Formmasse, vorzugsweise in Form eines thermoplastisch verarbeitbaren Granulats für die Herstellung von Folien verschiedener Stärke für zumindest teilweise wasserlösliche oder -dispergierbare Verpackungen. Weiters betrifft die vorliegende Erfindung aus einer derartigen Formmasse bzw. Granulat hergestellte und zumindest teilweise wasserlösliche oder -dispergierbare Folienverpackungen sowie formstabile Verpackungen für toxische bzw. gefährliche Wirkstoffe und Wirkstoffkonzentrate.

Toxische und/oder gefährliche Wirkstoffe, wie pulverförmige, gelartige oder flüssige Reizchemikalien, werden in zunehmenden Maße im Agrarbereich, einschließlich des Gartenbereichs, für den Pflanzenschutz, als Holzschutzmittel, zur Schädlingsbekämpfung, als Düngemittel und als Pflanzenhilfsstoffe, sowie als Desinfektionsmittel, im Haushalts-, Sanitär- und Schwimmbadbereich oder auch in der Bauindustrie verwendet. Bei der Entwicklung der verschiedensten Formulierungen (Anwendungsformen) von Wirkstoffen und -konzentraten wurde in den letzten Jahren immer mehr auf Umweltverträglichkeit und einfachere, sicherere Anwendung für Landwirt, Gärtner, Arbeiter, im Haushalt tätiger Person bzw. allgemein für den Anwender geachtet. Insbesondere im Bereich der Pflanzenschutzmittel wurden bei festen Formulierung die Spritzpulver zu einem großen Teil durch fließfähige Suspensionen (suspensions concentrates, "SC") und dispergierbare Granulate (wettable granules, "WG") ersetzt. Doch auch diese Granulate sind insofern noch immer gefährlich, als der durch Abrieb verursachte Staub unbeabsichtigt eingeatmet werden kann und so für den Anwender ein nicht zu unterschätzendes Gesundheitsrisiko darstellt.

Eine weitere sehr wichtige und von der Menge bedeutsame Gruppe stellen die emulgierbaren Konzentrate (emulsifiable concentrates "EC") dar. Viele flüssige oder pastenförmige toxische Wirkstoffe und auch solche mit niedrigem Schmelzpunkt (kleiner 50°C) werden auf diese Art formuliert. Dabei werden die Wirkstoffe in Lösungsmitteln gelöst und passende Emulgatoren zugegeben. Die Konzentration der Wirkstoffe in solchen Formulierungen liegt zwischen 10 und 80 %-Masse.

Ein Nachteil dieser emulgierbaren Konzentrate gegenüber z.B. Suspensionskonzentraten (in denen der Wirkstoff nicht als molekulare Lösung sondern als suspendierte kleine Feststoffpartikel vorliegt) und festen dispergierbaren Granulaten ist jedoch die im Vergleich zum Wirkstoff oft hohe Toxizität der emulgierbaren Konzentrate. Durch die Formulierung wird der Verdünnungseffekt aufgehoben und manchmal ist die Formulierung toxischer als der jeweilige Wirkstoff für sich alleine. Weiters wird dadurch, daß die bei emulgierbaren Konzentrate verwendeten Lösungsmittel zumeist auch gute Fettlöser sind, in manchen Fällen bei Körperkontakt die Aufnahme der Wirkstoffe durch die Haut sogar erhöht.

Emulgierbare Konzentrate müssen daher in hochwertige, lösungsmittelfeste Materialien verpackt werden. Typisch dafür sind z.B. Weißblechdosen, Aluflaschen, Glasflaschen, COEX, PET-Flaschen und innenfluorierte Polyethylenflaschen und -kanister.

Der Anwender verdünnt dann das Konzentrat mit Wasser auf die geforderte Konzentration und ist dabei den beschriebenen Risken bei Körperkontakt mit dem Wirkstoff ausgesetzt.

Ein wichtiges Problem sind auch die zurückbleibenden Verpakkungen, die praktisch nie völlig entleert sind. Viele Verpackungen lassen sich auch nicht gut reinigen oder Lösungsmittel und Wirkstoffe diffundieren in die Wandungen der Verpackungen und verbleiben somit in den verbrauchten leeren Verpackungen über einen langen Zeitraum unkontrolliert in unserer Umwelt.

Eine Lösung der geschilderten Probleme stellt ein System dar, in welchem der feste oder flüssige Wirkstoff, beispielsweise ein Biozid oder auch ein Waschmittel, für die jeweilige Anwendung (also für eine bestimmte Fläche bzw. für eine bestimmte Wäschemenge) vordosiert ist und die Primärverpackung mitaufgelöst und zusammen mit dem Wirkstoff verwendet bzw. aufgebracht wird. So wird verhindert, daß der Anwender direkt mit dem teilweise hochgiftigen Konzentrat in Berührung kommt und daß kontaminierte Verpackung zurückbleibt.

Es gibt bereits verschiedene Systeme, wo ein Biozidkonzentrat in wasserlöslichen Beuteln (z.B. aus Polyvinylalkohol) als Primärverpackung gefüllt wird.

Beispielsweise beschreibt die EP-A1-0 449 773 pestizide nichtwässerige Wirkstoffkonzentrate in abgepackter Form, welche in einem aus einer wasserlöslichen Folie bestehenden Beutel eingeschlossen sind. Da derartige Beutel eine relativ hohe Stoss- und Schlagempfindlichkeit aufweisen und leicht platzen, wurde die Viskosität des Pestizidkonzentrats durch einen viskositätssteigernden Zusatz auf 1000 bis 20000 cp erhöht. Die Beutel können aus Polyvinylalkohol, Polyvinylpyrrolidon, Copolymeren von Vinylalkohol und Vinylpyrrolidon, Copolymeren von Vinylalkohol und Vinylacetat oder Folien auf Cellulosebasis, z.B. Folien aus Carboxymethylcellulose, bestehen.

WO 92/01376, WO 92/01377 und WO 92/01378 betreffen jeweils ein in Wasser dispergierbares organisches Gel enthaltend ein gefährliches Produkt, welches Gel z.B. in wasserlöslichen oder wasserdispergierbaren Säcken aus Polyethylenoxid, Stärke oder modifizierter Stärke, Alkyl- oder Hydroxyalkylcellulose, Carboxyalkylcellulose, Polyvinylether, Methylcellulose, Polyvinylalkohol und dgl. verpackt werden kann, wodurch eine sichere Handhabung des gefährlichen Produkts und eine verminderte Umweltgefährdung ermöglicht wird.

Gemäß der GB-PS 922 317 werden wasserlösliche oder -dispergierbare Behälter für Pestizide vorgesehen, wobei das Material für die Behälter Polyvinylalkohol umfaßt. Die Wandstärke der Behälter soll zwischen 0,04 und 0,1 mm betragen, sodaß der Behälter in Form von Säcken, Beuteln oder Sachets vorliegt. Sicherheitshalber sollten diese Behälter zusätzlich in einer leicht entfernbaren Hülle aus Polyethylen versehen werden.

Auch gemäß der US-PS 3 695 989 werden geschäumte Filme aus Polyvinylalkohol, Polyvinylpyrrolidon oder Mischungen der beiden mit dispergierten Gasblasen, deren Volumen 80 bis 99 % des Gesamtvolumens des Films ausmacht, für in kaltem Wasser lösliche Verpackungen pulverförmiger Stoffe eingesetzt. Die Dicke des Films beträgt dabei 2 bis 50 mil (d.h. 0,005 bis 0,13 cm). Aufgrund der hohen Wasserempfindlichkeit dieser Filme sollen die gebildeten Verpackungen zusätzlich in einer leicht entfernbaren Hülle, z.B. aus Polyethylen, Polypropylen, Cellophan oder Wachspapier, versehen werden.

In den EP-A1-0 347 220 und EP-A1-0 347 222 wird eine Verpakkung für eine in Wasser zu lösende oder zu dispergierende Flüssigkeit, beispielsweise ein Pestizid, beschrieben, welche Flüssigkeit in einer Hülle aus wasserlöslichem oder -dispergierbaren Material enthalten ist. Die Hülle weist dabei flexible Wände und eine wasserlösliche oder wasserdispergierbare Heißversiegelung auf und besteht aus Polyethylenoxid, Methylcellulose oder Polyvinylalkohol. Die befüllte Hülle wird dann zusätzlich in einen wasserdichten äußeren Behälter verpackt.

Die EP-A1-0 524 721 und die EP-A1-0 518 629 betreffen ein Behältersystem umfassend eine konzentrierte gefährliche und gelierte bzw. feste Zusammensetzung in einem in kaltem Wasser löslichen oder wasserdispergierbaren Beutel, der nicht zur Gänze gefüllt ist. Durch diese unvollständige Befüllung soll die relativ hohe Stoss- und Schlagempfindlichkeit der Beutel vermindert werden. Die Folie der Beutel besteht aus Polyethylenoxid, Stärke oder modifizierter Stärke, Alkyl- oder Hydroxyalkylcellulose, Carboxyalkylcellulose, Polyvinylether, Methylcellulose, Polyvinylalkohol und dgl.

In der EP-A1-0 406 170 werden Verpackungen für pulverförmige Zusätze oder Granulate zu einem flüssigen Medium beschrieben, wobei die Verpackung einen ersten, im flüssigen Medium löslichen und/oder dispergierbaren Teil (einen den Verschluß bildenden Klebefilm) und einen zweiten, im flüssigen Medium unlöslichen und/oder nicht dispergierbaren Teil (den eigentlichen Behälter) umfaßt. Bei Benetzen des Klebefilms, z.B. mit Wasser, soll dieser unter Einfluß des Gewichts des Inhalts nachgeben und die Faltung des eigentlichen Behälters sich somit öffnen.

Im Stand der Technik werden auch die Probleme der mechanischen Stabilität des Primärbehälters aus Polyvinylalkohol-Folien beschrieben.

Eine Aufgabe der vorliegenden Erfindung ist es, die mit synthetischen Folienverpackung verbundenen Probleme zu überwinden und eine steife, formstabile und dennoch rasch wasserlösliche Verpackung für toxische bzw. gefährliche Wirkstoffe und Wirkstoffkonzentrate zur Verfügung zu stellen.

Diese Aufgabe wird erfindungsgemäß dadurch gelöst, daß die formstabile Verpackung zumindest teilweise aus einer wasserlöslichen bzw. -dispergierbaren thermoplastischen Formmasse auf Basis von jeweils ein oder mehreren wasserlöslichen Ligninsulfonaten und/oder deren Derivaten und Salzen sowie diese enthaltende Mischungen als Gerüststoff(e) und Weichmachern besteht. Eine aus einer wasserlöslichen bzw. -dispergierbaren thermoplastischen Formmasse bestehende erfindungsgemäße formstabile Verpackung kann dabei z.B. die Form einer Dose, einer Flasche, eines Kanisters usw. aufweisen, entweder mit oder ohne Verschluß, je nachdem für welche Verwendung die Verpackung samt Inhalt vorgesehen ist. Selbstverständlich kann auch der Verschluß, etwa ein Schraubverschluß, aus der thermoplastischen Formmasse bestehen. Für den Fall der Verpackung von Wirkstoffen die in kleinen Mengen eingesetzt werden, etwa Waschmittel, kann die Verpackung auch die Form von Kugeln, Würfeln, Quader etc. aufweisen. Die Verpackung kann auch nur zum Teil aus einer wasserlöslichen bzw. -dispergierbaren thermoplastischen Formmasse bestehen, z.B. aus einem Becher gebildet aus der thermoplastischen Formmasse und einem entsprechenden Deckel aus einem anderen Material, wie Alufolie. Weiters ist auch denkbar, daß eine zur Gänze aus der thermoplastischen Formmasse bestehende Verpackung in einer Überverpackung mit Durchbrechungen vorgesehen ist, welche Überverpackung nach Verwendung mit einer neuen erfindungsgemäßen Verpackung befüllt und wiederverwendet werden kann.

Allgemein werden an einen für die thermoplastische Formmasse der erfindungsgemäßen formstabilen Verpackung verwendbaren Gerüststoff die folgenden Anforderungen gestellt: Er muß auch in kaltem Wasser rasch löslich bzw. -dispergierbar sein, einen möglichst geringen Anteil an unlöslichen Anteilen enthalten, mit Makromolekülen (wie Stärke und Cellulosederivaten) mischbar, sowie mit dem Füllgut verträglich sein. Selbstverständlich können auch Mischungen von Gerüststoffen, welche diese Anforderungen erfüllen, verwendet werden. Als Weichmacher kommen die in der Kunststoffverarbeitung üblichen Komponenten in Frage, wobei diese jedoch wasserlöslich oder zumindest (ggf. unter Zuhilfenahme eines Dispergiermittels) wasserdispergierbar sein müssen, eine Kompatibilität mit den Gerüststoffen gegeben sein muß, der Weichmacher bioabbaubar oder zumindest nicht boden- und wassergefährdend (bei agroindustrieller Verwendung der erfindungsgemäßen Verpackung) zu sein hat und nicht aus der Wandung der erfindungsgemäßen Verpackung in die jeweilige Befüllung migrieren darf. Es können auch Mischungen von Weichmachern eingesetzt werden, insbesondere dann, wenn ein bestimmtes Auflöseverhalten erwünscht ist und/oder Gerüststoffe oder -kombinationen vorliegen, die von einer Mischung von Weichmachern besser plastifiziert werden können als von einem einzelnen Weichmacher.

Vorzugsweise basiert die thermoplastische Formmasse für die formstabilen Verpackungen auf natürlichen und/oder modifizierten Gerüststoffen, wie Ligninsulfonaten und deren Salze, insbesondere Magnesiumligninsulfonaten, Polyvinylpyrrolidon Polycarboxylaten sowie Mischungen hievon, und Weichmachern, wie Polyolen, pflanzlichen Ölen und deren Derivate, Citratweichmachern und Phthalatweichmachern. Als Weichmacher besonders bevorzugt werden hiebei Glycerin, Polyglycerine, Glycole, insbesondere Diethylenglycol und Propylenglycol, sowie Polyglycole; epoxidiertes Raps- und Sojaöl, Rizinusöl und epoxidiertes Rizinusöl; Acetyltriethylcitrat, Acetyltributylcitrat und Triethylcitrat sowie Diethylphthalat, Dibutylphthalat, Diisobutylphthalat und Dioctylphthalat, sowie Mischungen derselben.

Gemäß einer besonders bevorzugten Ausführungsform der vorliegenden Erfindung basiert eine thermoplastische Formmasse auf Ligninsulfonaten und/oder deren Derivaten und Salzen, insbesondere Magnesiumligninsulfonaten, sowie Mischungen hievon, als Gerüststoff(e). Ligninsulfonate können aus nachwachsenden pflanzlichen Rohstoffen gewonnen werden und stehen daher kostengünstig zur Verfügung. Lignin bildet im Holz ein dreidimensionales Netzwerk, in welches die Cellulosefasern eingebettet sind. Überraschenderweise wurde nun gefunden, daß Ligninsulfonate, Magnesiumligninsulfonate, Kraft-Ligninsulfonate und auch getrocknete Sulfitablauge (d.h. Kraft-Ligninsulfonate in ungereinigter Form) nicht nur als Dispergiermittel wirken, sondern selbst thermoplastische Eigenschaften besitzen. Um die Dispergierbarkeit zu erhöhen, wurde versucht, möglichst große Mengen an handelsüblichen Ligninsulfonaten (z.B. solche der Fa. Borregaard Industries Ltd., N-1701 Strapsborg) bzw. der noch billigeren Magnesiumligninsulfonate (z.B. solche der Fa. Lenzing, A-4860, Lenzing, AT), in die thermoplastische Formmasse einzumischen, wobei sich herausstellte, daß nicht nur die Auflösung des Materials stark beschleunigt sondern auch die Verarbeitbarkeit, z.B. die Extrudierbarkeit, verbessert wird. Ligninsulfonat und insbesondere Magnesiumligninsulfonat hat überdies einen relativ geringen Preis, sodaß es auch kostenmäßig eine echte Alternative zu den zur Herstellung von wasserlöslichen Folien verwendeten bekannten Polyvinylalkoholen darstellt.

Insbesondere werden die folgenden Ligninsulfonate bzw. Ligninsulfonatderivate sowohl einzeln als auch in Kombination miteinander zur Herstellung der erfindungsgemäßen Verpackungen, sowohl formstabil als auch in Form von Folien, bzw. der erfindungsgemäßen Formmasse bevorzugt verwendet:

| d.s.¹ | %-OCH₃ | pH der Lsng. | | Farbe |
|---|---|---|---|---|
| Vanisperse² | 0,17 | 11,9 | 7,3 | dunkelbraun |
| Ultrazine² | 0,46 | 10,7 | 8,0 | lichtbraun |
| Borresperse NA² | 0,60 | 7,8 | 8,0 | braun |
| Zewa EF² | k.A.³ | k.A. | 8,0 | braun |
| Lignofluid-Mg⁴ | k.A. | k.A. | ca. 2,4⁵ | k.A. |

| | | | | |
|---|---|---|---|---|
| ¹ Anzahl der Sulfonsäuregruppen/Phenylpropaneinheit | | | | |
| ² von Fa. Borregaard | | | | |
| ³ keine Angaben | | | | |
| ⁴ von Fa. Lenzing, A-4860, Lenzing, AT | | | | |
| ⁵ als 60% wässerige Lösung. Da diese nicht sprühgetrocknet werden kann, wurde vor der Verarbeitung ein Premix in Form eines homogenen Granulats mit Kaolin hergestellt. | | | | |

Als Kraft-Ligninsulfonat wurde Reax 910 und als getrocknete Sulfitablauge Wafex PC (beide von der Fa. Westvaco, Charston Heights, PO-Box 70848, South Carolina, USA) eingesetzt.

Vorzugsweise weist die erfindungsgemäße thermoplastische Formmasse die folgende Zusammensetzung auf:

| | |
|---|---|
| 5 bis 95 %-Masse | Gerüststoff(e) für formstabile Verpackungen, bzw. |
| 5 bis 95 %-Masse | Ligninsulfonate und/oder deren Derivate und Salze, insbesondere Magnesiumligninsulfonate, sowie Mischungen hievon, für Folienverpackungen |
| 5 bis 40 %-Masse | Weichmacher, |
| 0 bis 85 %-Masse | Reserve- und/oder Zellwandpolysaccharide, |
| 0 bis 60 %-Masse | Füllstoffe sowie gegebenenfalls |
| 0 bis 5 %-Masse | weiterer Hilfsstoffe. |

Füllstoffe werden verwendet, um die Schlagzähigkeit und Steifigkeit des Materials zu erhöhen, bei der bestimmungsgemäßen Verwendung die Auflösung durch Vergrößerung der inneren Oberfläche zu erhöhen, ein Absinken der erfindungsgemäßen Verpackung im Mischbehälter zu erleichtern und den Preis des Materials für die Verpackung zu senken.

Günstig ist, wenn die Reserve- und/oder Zellwandpolysaccharide der thermoplastischen Formmasse ausgewählt sind aus der Gruppe bestehend aus Cellulosederivaten und natürlicher und modifizierter Stärke.

Cellulosederivate werden bereits seit langem zur Herstellung von Filmen, Folien und Spritzgußteilen eingesetzt. Die in der Kunststoffindustrie bisher eingesetzten Derivate, in erster Linie Celluloseacetat, Cellulosepropionat und Celluloseacetobutyrat, sind in Wasser und Kohlenwasserstoffen unlöslich, in polaren und mittelpolaren Lösungsmitteln gut löslich. Es befinden sich auch wasserlösliche Derivate am Markt, die jedoch bisher nicht zur Herstellung von thermoplastischen Teilen Verwendung fanden. Die wasserlöslichen Cellulosederivate werden eingeteilt in lösungsmittel- und kaltwasserlösliche sowie heißwasserlösliche Typen. Von den kaltwasserlöslichen Derivaten kommen für die in den erfindungsgemäßen Verpackungen enthaltenen thermoplastischen Formmassen insbesondere Hydroxyethylcellulose, Hydroxypropylcellulose (z.B. Klucel von Aqualon G.m.b.H., D-4000 Düsseldorf 13), Hydroxypropylmethylcellulose, Methylcellulose, Methylethylcellulose, Methylhydroxyethylcellulose, Methylhydroxypropylcellulose, Carboxymethylcellulose, Carboxymethylethylcellulose, Carboxymethylhydroxyethylcellulose und Mischungen hievon in Frage.

Das Derivat mit den ausgeprägtesten thermoplastischen Eigenschaften ist eine Hydroxypropylcellulose. Sie kann mit wasserlöslichen Weichmachern compoundiert und anschließend zu Folien und Formteilen verarbeitet werden.

Stärke ist ein planzliches Reservepolysaccharid bestehend aus zwei Hauptfraktionen, der vorwiegend linear gebauten Amylose und dem verzweigten Amylopektin. Native Stärke ist nur zu einem sehr geringen Teil in Wasser löslich, kann aber durch Einwirkung von thermischer Energie in Gegenwart von Wasser in einen viskoelastischen "Kleister" übergeführt werden. Durch mechanisch-thermische Behandlung in einem Extruder wird Stärke neben einem Molekulargewichtsabbau ähnlichen Umwandlungsprozessen unterzogen wie durch Erhitzen mit Wasser.

Im Verlauf der Versuche zur vorliegenden Erfindung stellte sich heraus, daß mechanisch-thermische Beanspruchung der Stärke allein nicht immer zu der gewünschten Löslichkeit führt, sodaß auch teilweise abgebaute Stärke eingesetzt wurde. Solche Produkte sind unter der Bezeichnung Maltodextrine im Handel erhältlich und werden durch ihren DE-Wert (Dextrose Equivalent) charakterisiert. Versuche mit Maltodextrinen mit 6 bis 20 DE (z.B. von der Fa. AVEBE, NL-9607 PT Foxhol) verliefen positiv und zeigten gegenüber nativer Stärke deutlich erhöhte Löslichkeit. Weitere Spezialprodukte, welche gute Resultate gaben, waren:
- Lyckeby 9109 der Fa. Lyckeby Stärkelsen, Sveriges Stärkelseproducenter, S-29191 Kristianstad (bestehend aus kaltwasserlöslicher, walzengetrockneter Kartoffelstärke, für Backversuche),
- Baka Snack E der Fa. National Starch & Chemical, D-6730 Neustadt 17 (auf Maisstärke basierend, geringe Viskosität) und
- Ultra Sperse A, ebenfalls von National Starch & Chemical (leicht hydrophobierte, teilabgebaute Maisstärke).

Somit kommen für die in den erfindungsgemäßen Verpackungen enthaltenen thermoplastischen Formmassen als natürliche und modifizierte Stärke insbesondere teilweise abgebaute Stärke, wie die oben angeführten, sowie Kartoffel-, Tapioca-, Reis-, Mais-, Weizen- und anderen Getreidestärken, Maltodextrinen aus diesen Stärken mit DE-Werten von 4 bis 20, vorverkleisterten Stärken, kationischen Stärken, acetylierten Stärken, hydroxypropylierten Stärken und Mischungen hievon in Frage.

Besonders vorteilhaft ist, wenn die thermoplastische Formmasse der erfindungsgemäßen Verpackung aus

| | |
|---|---|
| 20 bis 80 %-Masse | Ligninsulfonate oder deren Salze, insbesondere Magnesiumligninsulfonat, und Mischungen hievon |
| 10 bis 30 %-Masse | Weichmacher, |
| 5 bis 35 %-Masse | Stärken, |
| 0 bis 40 %-Masse | Cellulosederivate, |
| 5 bis 40 %-Masse | Füllstoffe sowie gegebenenfalls |
| 0 bis 5 %-Masse | weiterer Hilfsstoffe |

besteht.

Vorzugsweise werden dabei als Stärke Maltodextrine mit DE-Werten von 6 bis 10, sowie getrocknete, vorverkleisterter Stärke und als Cellulosederivat Hydroxypropylcellulose verwendet.

Die Einsatzmengen von Füllstoffen betragen bis zu 60 %-Masse, sodaß sich dadurch bedeutende Kosteneinsparungen erzielen lassen. Weiters zeigte sich, daß durch den Zusatz von Füllstoffen nicht nur die mechanischen Eigenschaften verbessert wurden sondern auch die Löslichkeit (Dispergierbarkeit) des Materials in Wasser deutlich zunahm.

Gemäß einer bevorzugten Ausführungsform sind die Füllstoffe der thermoplastischen Formmasse ausgewählt aus mineralischen Füllstoffen, organischen Füllstoffen und Mischungen hievon. Insbesondere kommen als mineralische Füllstoffe Talkum (z.B. der Fa. Naintsch Mineralwerke, A-8045 Graz-Andritz)), Kreide, Glimmer, Dolomit, Quarz und natürliche Verwachsungen sowie Mischungen hievon in Frage. Als organische Füllstoffe können pflanzliche Fasern, vorzugsweise Cellulosefasern (z.B. Vitacell der Fa. J. Rettenmaier & Söhne, D-73494 Ellwangen-Holzmühle), Baumwollfasern und dergleichen verwendet werden.

Günstig ist, wenn die Füllstoffe der thermoplastischen Formmasse ausgewählt sind aus Talkum, Kreide, kurzfasrige Cellulosefasern (kleiner als 800 µm) und Mischungen hievon.

Die thermoplastische Formmasse der erfindungsgemäßen formstabilen Verpackung kann als weitere Hilfsstoffe z.B. noch Sprengmittel, Trennmittel und/oder Emulgatoren enthalten.

Als Emulgatoren haben sich beispielsweise Glycerinmonostearat (Tegomuls 9102 der Fa. Th. Goldschmidt AG (TEGO) D-45127 Essen) bewährt.

Die Wirkung der Sprengmittel ist auf eine starke Volumszunahme in Gegenwart von Wasser zurückzuführen, wobei eine bestimmte Porenstruktur in der Grundmasse erhalten sein muß, um dem Wasser Zutritt zum Sprengmittel zu ermöglichen. Vorzugsweise ist in der thermoplastischen Formmasse der erfindungsgemäßen formstabilen Verpackung quervernetztes Polyvinylpyrrolidon (Polyplasdone XL der Fa. ISP Switzerland AG, CH-6304 Zug) als Sprengmittel enthalten.

Gemäß einer weiteren Ausführungsform der vorliegenden Erfindung werden eine thermoplastisch verarbeitbare, wasserlösliche bzw. - dispergierbare Formmasse basierend auf Ligninsulfonaten und/oder deren Derivaten und Salzen, insbesondere Magnesiumligninsulfonaten, sowie Mischungen hievon, als Gerüststoff(e) und Weichmachern, sowie Folienverpackungen für toxische bzw. gefährliche Wirkstoffe und Wirkstoffkonzentrate, welche zumindest teilweise aus einer derartigen wasserlöslichen bzw. - dispergierbaren thermoplastischen Formmasse bestehen, zur Verfügung gestellt.

Zur Herstellung der erfindungsgemäßen Verpackung werden vorerst die einzelnen Bestandteile vermischt und zu einem Granulat verarbeitet. Wenn diese Verarbeitung in einem Extruder erfolgt, kann die Temperaturführung vorteilhaft innerhalb der folaenden Grenzen eingestellt werden:

| | Bereich | besonders bevorzugt |
|---|---|---|
| - Einzugszone | 10 - 80°C | 20 - 40°C |
| - Mischzone | 60 - 150°C | 90 - 125°C |
| - Plastifizierzone | 100 - 180°C | 125 - 155°C |
| - Vakuumzone | 40 - 180°C | 60 - 80°C |
| - Druckaufbauzone | 80 - 180°C | 80 - 155°C |
| - Spritzkopf | 90 - 180°C | 90 - 150°C |

Insbesondere darf aus der Mischzone kein Produktdampf in die Einzugszone zurückströmen, da dies infolge Verklumpen der Pulverzutaten zu einer Verstopfung des Trichters und damit zum Anlagenstillstand führt. Die Temperatur der Einzugszone ist daher unterhalb des Siedepunkts von Wasser zu halten. Die Verfahrenslänge für den Einzug beträgt vorzugsweise 3 - 6 D. Zur Vermeidung von übermäßiger Dampfbildung ist auch die Mischzone bei moderaten Bedingungen zu fahren. Weiters ist bei der Temperierung der Plastifizierzone auf die Schmelzpunkte der verwendeten Polymere Rücksicht zu nehmen. Die Entgasungszone wird als Vakuumentgasung mit Rückführschnecke gefahren, um die entstehenden Dampfmengen zuverlässig absaugen zu können. Zu starkes Vakuum ist ebenfalls zu vermeiden, da dies zur Verhärtung des eingesetzten Materials führt.

Die folgenden Beispiele dienen der Erläuterung der vorliegenden Erfindung und sollen diese keinesfalls beschränken.

### Beispiele 1 bis 3

Die in der folgenden Tabelle 1 angegebenen Zusammensetzungen wurden in einem Extruder zu Granulat verarbeitet (alle Angaben in %-Masse, wenn nicht anders angegeben).

**Tabelle 1**

| Beispiel | 1 | 2 | 3 |
|---|---|---|---|
| Gerüststoff Ligninsulfonat (Zewa EF) | 26,74 | 34,72 | 42,30 |
| Cellulosederivat Hydroxypropylcellulose (Klucel M) | 26,74 | 17,36 | 8,46 |
| Weichmacher (Glycerin D 1.26) | 10,70 | 13,02 | 15,23 |
| Füllstoff (Talkum) | 35,64 | 34,73 | 33,84 |
| weitere Hilfsstoffe (Glycerinmonostearat) | 0,18 | 0,17 | 0,17 |

Die trockenen Komponenten wurden in einen Mischbehälter eingewogen und mittels eines Planetenmischers bei 200 Upm während 5 Minuten gemischt. Der Weichmacher wurde in die volumetrische Dosiervorrichtung des Extruders gefüllt und diese kalibriert. Die Dosierung der vorgemischten Trockenstoffe erfolgte gravimetrisch über einen Doppelschnecken-loss-in-weight-feeder mit hoher Präzision (± 0,5 %).

Zur Granulatherstellung stand eine gleichläufige dichtkämmende Extruderanlage der Firma Togum (F-67116, Reichstett) mit einer Verfahrenslänge von 36 Durchmessern bei 45 mm Schnekkendurchmesser zur Verfügung. Die Anlage besteht aus den Dosiersystemen für feste und flüssige Komponenten, dem Extruder mit Antriebsteil und Verfahrensteil, einer Vakuumentgasungsvorrichtung, einem Kühlband und einem Stranggranulator. Die Steuerung und Regelung erfolgt über eine speicherprogrammierbare Steuerung sowie einen Mikrocomputer zur Rezeptprogrammierung und einem PC zur Meßwerterfassung und Dokumentation. Das Temperaturprofil bei der Verarbeitung der jeweiligen Mischungen zu einem Granulat war wie folgt:

| | |
|---|---|
| - Einzugszone | 10-30°C |
| - Mischzone | 95-125°C |
| - Plastifizierzone | 155-175°C |
| - Vakuumzone | 70-90°C |
| - Druckaufbauzone | 105-180°C |
| - Spritzkopf | 110-150°C |

Drehzahl der Schnecke 120-230 Upm, Druck in der Vakuumentgasungsvorrichtung 200-800 mbar.

| Beispiel | 1 | 2 | 3 |
|---|---|---|---|
| Produktdruck (bar) | 30 | 30 | 33 |
| Drehmoment an der | | | |
| Antriebswelle (Nm) | 44 | 45 | 40 |
| Produkttemperatur | > 130°C | > 130°C | 124°C |

Für die weitere Verarbeitung des Granulats zu Flaschen diente ein Battenfeld-Fischer Blasformextruder mit den folgenden Charakteristika:
- Einschneckenmaschine mit genuteter Buchse,
- Kurzkompressionsschnecke mit Mischteil, Drehzahl 15/min,
- Verfahrenslänge L/D = 15,
- 5 Heizzonen im Gehäuse, 1 temperierter Blaskopf,
- als Formwerkzeug eine 500 ml Flasche mit 2 mm Wandstärke,
- Dosierung über den Fülltrichter.

Das Temperaturprofil im Blasformextruder bei Herstellung der Flaschen war wie folgt:

| | |
|---|---|
| - Einzugzone | 85°C, |
| - Plastifizierzone | 150°C, |
| - Förderzone | 150°C und |
| - Formwerkzeug Düse | 130 bis 150°C. |
| Form | wassergekühlt |

Die erhaltenen Flaschen erwiesen sich als formstabil sowie rasch und vollständig wasserlöslich.

### Beispiele 4 bis 6

Die in der folgenden Tabelle 2 angegebenen Zusammensetzungen wurden in einem Extruder zu Granulat verarbeitet (alle Angaben in %-Masse, wenn nicht anders angegeben).

**Tabelle 2**

| Beispiel | 4 | 5 | 6 |
|---|---|---|---|
| Gerüststoffe | | | |
| Ligninsulfonat Borresperse NA | | | 29,07 |
| Vanisperse | 29,56 | | |
| Ultrazine | | 28,48 | |
| Cellulosederivat | | | |
| Hydroxypropylcellulose (Klucel M) | 21,11 | 20,34 | 20,76 |
| Weichmacher (Glycerin D 1.26) | 15,20 | 18,31 | 16,61 |
| Füllstoffe | | | |
| Talkum | 33,79 | | |
| Kreide | | 32,55 | 33,22 |
| weitere Hilfsstoffe | | | |
| Glycerinmonostearat | 0,17 | 0,16 | 0,17 |
| Calciumstearat | 0,17 | 0,16 | 0,17 |

Zur Granulatherstellung stand die für die Beispiele 1 bis 3 beschriebene Anlage zur Verfügung. Das Temperaturprofil bei der Verarbeitung der jeweiligen Mischungen zu einem Granulat war wie oben angegeben.

Drehzahl der Schnecke 200 Upm, Druck in der Vakuumentgasungsvorrichtung 200 mbar.

| Beispiel | 4 | 5 | 6 |
|---|---|---|---|
| Produktdruck (bar) | 50 | 37 | 36 |
| Spez. mech. Energie (Wh/kg) | 80 | 150 | 185 |
| Produkttemperatur | 125°C | 124°C | 123°C |

Für die weitere Verarbeitung des Granulats zu Flaschen diente der für die Beispiele 1 bis 3 beschriebene Battenfeld-Fischer Blasformextruder. Das Temperaturprofil bei Herstellung der Flaschen war wie folgt:

| | |
|---|---|
| - Einzugzone | 85°C, |
| - Plastifizierzone | 150°C, |
| - Förderzone | 150°C und |
| - Formwerkzeug Düse | 130 bis 150°C. |
| Form | wassergekühlt |

Die erhaltenen Flaschen erwiesen sich als formstabil sowie rasch und vollständig wasserlöslich.

### Beispiele 7 bis 9

Die in der folgenden Tabelle 3 angegebenen Zusammensetzungen wurden in einem Extruder zu Granulat verarbeitet (alle Angaben in gerundeten %-Masse, wenn nicht anders angegeben). Als Gerüststoff wurde unter anderem auch ein Kraft-Ligninsulfonat (Reax 910) bzw. getrocknete Sulfitablauge (Wafex PC) eingesetzt.

**Tabelle 3**

| Beispiel | 7 | 8 | 9 |
|---|---|---|---|
| Gerüststoff Ligninsulfonat | | | |
| Reax 910 | | 25 | |
| Wafex PC | 12,5 | | |
| Ultrazine | 12,5 | | 36 |
| Cellulosederivat | | | |
| Hydroxypropylcellulose | 25 | 25 | 11 |
| (Klucel H) | | | |
| Weichmacher | 25 | 25 | 25 |
| (Glycerin) | | | |
| Füllstoffe | | | |
| Talkum | 25 | 25 | 28 |
| weitere Hilfsstoffe | | | |
| Glycerinmonostearat | 0,25 | 0,25 | 0,18 |
| Calciumstearat | | | 0,18 |

Zur Granulatherstellung stand ebenfalls die für die Beispiele 1 bis 3 beschriebene Anlage zur Verfügung. Das Temperaturprofil bei der Verarbeitung der jeweiligen Mischungen zu einem Granulat war wie oben angegeben.

Drehzahl der Schnecke 200 Upm, Druck in der Vakuumentgasungsvorrichtung 200 mbar.

| Beispiel | 7 | 8 | 9 |
|---|---|---|---|
| Produktdruck (bar) | 32 | 29 | 30 |
| Drehmoment an der | | | |
| Antriebswelle (Nm) | 30 | 26 | 25 |
| Produkttemperatur | 114°C | 115°C | 115°C |

Alle Massen ließen sich problemlos verarbeiten.

### Beispiel 10

In einen Wirbelschichtgranulator mit ca. 5 1 Korbinhalt wurden 1 kg Kaolin vorgelegt. Darauf wurden 3,3 kg des mit einem Hochgeschwindigkeitsrührer homogenisierten Magnesiumligninsulfonats (Lignofluid-Mg der Fa. Lenzing) als Aufschlämmung aufgesprüht, wodurch ein homogenes Granulat mit einem Gehalt von ca. 66 %-Masse Magnesiumligninsulfonat erhalten wurde. Je nach Temperaturführung wies das Granulat eine Korngröße von durchschnittlich 500 bis 2000 µm auf.

Die in der folgenden Tabelle 4 angegebenen Zusammensetzungen wurden in einem Extruder zu Granulat verarbeitet (alle Angaben in gerundeten %-Masse, wenn nicht anders angegeben). Als Gerüststoff wurde unter anderem das wie oben beschrieben hergestellte Magnesiumligninsulfonat-Premix eingesetzt.

**Tabelle 4**

| Beispiel | 10 |
|---|---|
| Gerüststoff | |
| Magnesiumligninsulfonat-Premix (ca. 66 %-Masse Lignofluid-Mg) | 18,5 |
| Ultrazine | 12,5 |
| Cellulosederivat | |
| Hydroxypropylcellulose (Klucel H) | 25 |
| Weichmacher (Glycerin) | 25 |
| Füllstoffe | 18,7 |
| Talkum | |
| weitere Hilfsstoffe | |
| Glycerinmonostearat | 0,3 |

Zur Granulatherstellung stand ebenfalls die für die Beispiele 1 bis 3 beschriebene Anlage zur Verfügung. Das Temperaturprofil bei der Verarbeitung der jeweiligen Mischungen zu einem Granulat war wie oben angegeben.

Drehzahl der Schnecke 200 Upm, Druck in der Vakuumentgasungsvorrichtung 200 mbar.

| Beispiel | 10 |
|---|---|
| Produktdruck (bar) | 31 |
| Drehmoment an der | |
| Antriebswelle (Nm) | 28 |
| Produkttemperatur | 115°C |

Auch das Magnesiumligninsulfonat-Granulat ließ sich sowohl im Extruder als auch beim Blasformen problemlos verarbeiten.

### Beispiel 11

Die in der folgenden Tabelle 5 angegebene Zusammensetzung wurden in einem Extruder zu Granulat verarbeitet (alle Angaben in %-Masse, wenn nicht anders angegeben).

**Tabelle 5**

| Beispiel | 11 |
|---|---|
| Gerüststoff | |
| Ligninsulfonat | |
| Zewa EF | 51,94 |
| Cellulosederivat | |
| (Baka Snack E) | 8,65 |
| Weichmacher | 12,98 |
| (Glycerin D 1.26) | |
| Füllstoffe | |
| Talkum | 25,97 |
| weitere Hilfsstoffe | |
| Glycerinmonostearat | 0,43 |

Zur Granulatherstellung stand die für die Beispiele 1 bis 3 beschriebene Anlage zur Verfügung. Das Temperaturprofil bei der Verarbeitung der jeweiligen Mischungen zu einem Granulat war wie folgt:

| | |
|---|---|
| - Einzugszone | 15°C |
| - Mischzone | 95°C |
| - Plastifizierzone | 155°C |
| - Vakuumzone | 50°C |
| - Druckaufbauzone | 80°C |
| - Spritzkopf | 110-130°C |

Drehzahl der Schnecke 200 Upm, Druck in der Vakuumentgasungsvorrichtung 500 mbar.

Für die weitere Verarbeitung des Granulats zu Folien diente ein Kraus-Maffei-Extruder mit den folgenden Charakteristika:
- Gegenläufertyp,
- Zylinderschnecke mit 25 mm Nenndurchmesser,
- Verfahrenslänge L/D = 16,
- 2 Heizzonen im Gehäuse, 1 temperierbare Einzugszone, 1 Entgasungszone,
- als Formwerkzeug ein 100 x 0,800 mm Breitschlitzwerkzeug mit Druckaufnehmer und Temperaturregler, 3-Walzen-Abzugsvorrichtung,
- Dosierung über eine K-Tron Soder Dosierbandwaage.

Das Temperaturprofil bei Herstellung der Folien war wie folgt:

| | |
|---|---|
| - Einzugzone | 20°C, |
| - Plastifizierzone | 140°C, |
| - Förderzone | 120 bis 160°C und |
| - Formwerkzeug | 100 bis 150°C. |

Die erhaltenen 8 bis 10 cm breiten Folienbänder wurden bei 23°C und 55 % relativer Feuchte konditioniert. Bei einem Lösungsversuch lösten sich die Folien nach ca. 2 min vollständig auf.

## Patentansprüche

1. Wasserlösliche bzw. -dispergierbare thermoplastische Formmasse auf Basis von jeweils ein oder mehreren wasserlöslichen Ligninsulfonaten und/oder deren Derivaten und Salzen sowie diese enthaltende Mischungen als Gerüststoff(e) und Weichmachern.

2. Wasserlösliche bzw. -dispergierbare thermoplastische Formmasse nach Anspruch 1, dadurch gekennzeichnet, daß sie auf Magnesiumligninsulfonaten und/oder deren Derivaten und Salzen sowie diese enthaltende Mischungen als Gerüststoff(e) und Polyolen, pflanzlichen Ölen und deren Derivate, Citratderivaten und Phthalatderivaten als Weichmachern basiert.

3. Thermoplastische Formmasse gemäß Anspruch 1 oder 2, dadurch gekennzeichnet, daß sie die folgende Zusammensetzung aufweist:
5 bis 95 %-Masse Ligninsulfonate und/oder deren Derivate und Salze, sowie Mischungen hievon,
5 bis 40 %-Masse Weichmacher,
0 bis 85 %-Masse Reserve- und/oder Zellwandpolysaccharide,
0 bis 60 %-Masse Füllstoffe sowie gegebenenfalls
0 bis 5 %-Masse weiterer Hilfsstoffe.

4. Thermoplastische Formmasse gemäß Anspruch 3, dadurch gekennzeichnet, daß die Reserve- und/oder Zellwandpolysaccharide der thermoplastischen Formmasse ausgewählt sind aus der Gruppe bestehend aus Cellulosederivaten, natürlicher und modifizierter Stärke, und Mischungen hievon.

5. Thermoplastische Formmasse gemäß Anspruch 4, dadurch gekennzeichnet, daß die Reserve- und/oder Zellwandpolysaccharide der thermoplastischen Formmasse ausgewählt sind aus der Gruppe bestehend aus Hydroxyethylcellulose, Hydroxypropylcellulose, Hydroxypropylmethylcellulose, Methylcellulose, Methylethylcellulose, Methylhydroxyethylcellulose, Methylhydroxypropylcellulose, Carboxymethylcellulose, Carboxymethylethylcellulose, Carboxymethylhydroxyethylcellulose, teilweise abgebaute Stärke, Kartoffel-, Tapioca-, Reis-, Mais-, Weizen- und anderen Getreidestärken, Maltodextrinen aus diesen Stärken mit DE-Werten von 4 bis 20, vorverkleisterten Stärken, kationischen Stärken, acetylierten Stärken, hydroxypropylierten Stärken und Mischungen hievon.

6. Thermoplastische Formmasse gemäß einem der Ansprüche 3 bis 5, dadurch gekennzeichnet, daß die Reserve- und/oder Zellwandpolysaccharide der thermoplastischen Formmasse ausgewählt sind aus der Gruppe bestehend aus Maltodextrinen mit DE-Werten von 6 bis 10, getrocknete, vorverkleisterter Stärke, Hydroxypropylcellulose und Mischungen hievon.

7. Thermoplastische Formmasse gemäß einem der Ansprüche 4 bis 6, dadurch gekennzeichnet, daß sie die folgende Zusammensetzung aufweist:
20 bis 80 %-Masse Ligninsulfonat(e) oder deren Salze und Mischungen hievon,
10 bis 30 %-Masse Weichmacher,
5 bis 35 %-Masse Stärken,
0 bis 40 %-Masse Cellulosederivate,
5 bis 40 %-Masse Füllstoffe sowie gegebenenfalls
0 bis 5 %-Masse weiterer Hilfsstoffe.

8. Thermoplastische Formmasse gemäß einem der Ansprüche 3 bis 7, dadurch gekennzeichnet, daß die Füllstoffe ausgewählt sind aus mineralischen Füllstoffen, organischen Füllstoffen und Mischungen hievon.

9. Thermoplastische Formmasse gemäß Anspruch 8, dadurch gekennzeichnet, daß die Füllstoffe ausgewählt sind aus Talkum, Kreide, kurzkettigen Cellulosefasern und Mischungen hievon.

10. Thermoplastische Formmasse gemäß einem der Ansprüche 3 bis 9, dadurch gekennzeichnet, daß als weiterer Hilfsstoff als Emulgator Glycerinmonostearat enthalten ist.

11. Thermoplastische Formmasse gemäß einem der Ansprüche 3 bis 9, dadurch gekennzeichnet, daß als weiterer Hilfsstoff als Sprengmittel ein quervernetztes Polyvinylpyrrolidon (Polyplasdone XL) enthalten ist.

12. Formstabile Verpackung für toxische bzw. gefährliche Wirkstoffe und Wirkstoffkonzentrate, dadurch gekennzeichnet, daß die Verpackung zumindest teilweise aus einer wasserlöslichen bzw. -dispergierbaren thermoplastischen Formmasse gemäß einem der Ansprüche 1 bis 11 besteht.

13. Folienverpackung für toxische bzw. gefährliche Wirkstoffe und Wirkstoffkonzentrate, dadurch gekennzeichnet, daß die Verpackung zumindest teilweise aus einer wasserlöslichen bzw. -dispergierbaren thermoplastischen Formmasse gemäß einem der Ansprüche 1 bis 11 besteht.

## Claims

1. A water-soluble or water-dispersible thermoplastic moulding mass each based on one or several water-soluble lignin sulfonates and/or the derivatives and salts thereof as well as mixtures containing the latter as skeleton substance(s),and plasticizers.

2. A water-soluble or water-dispersible thermoplastic moulding mass according to claim 1, characterized in that it is based on magnesium lignin sulfonates and/or the derivatives and salts thereof as well as on mixtures containing the latter as skeleton substance(s), and polyoles, vegetable oils and the derivatives, citrate-based derivatives and phthalate derivatives thereof as plasticizers.

3. A thermoplastic moulding mass according to claim 1 or 2, characterized in that it has the following composition:
5 to 95% by mass lignin sulfonates and/or the derivatives and salts thereof, as well as mixtures thereof,
5 to 40% by mass plasticizer,
0 to 85% by mass reserve and/or cell wall polysaccharides,
0 to 60% by mass fillers, as well as optionally
0 to 5% by mass further auxiliary agents.

4. A thermoplastic moulding mass according to claim 3, characterized in that the reserve and/or cell wall polysaccharides of the thermoplastic moulding mass are selected from the group consisting of cellulose derivatives, natural and modified starch, and mixtures thereof.

5. A thermoplastic moulding mass according to claim 4, characterized in that the reserve and/or cell wall polysaccharides of the thermoplastic moulding mass are selected from the group consisting of hydroxyethyl cellulose, hydroxypropyl cellulose, hydroxypropyl-methyl cellulose, methyl cellulose, methylethyl cellulose, methylhydroxyethyl cellulose, methylhydroxypropyl cellulose, carboxymethyl cellulose, carboxymethyl-ethyl cellulose, carboxymethyl-hydroxyethyl cellulose, partially degraded starch, potato, tapioca, rice, maize, wheat and other cereal starches, maltodextrines from these starches having DE-values of from 4 to 20, pre-pasted starches, cationic starches, acetylated starches, hydroxypropylated starches and mixtures thereof.

6. A thermoplastic moulding mass according to any one of claims 3 to 5, characterized in that the reserve and/or cell wall polysaccharides of the thermoplastic moulding mass are selected from the group consisting of maltodextrines having DE-values of from 6 to 10, dried, pre-pasted starch, hydroxypropyl cellulose and mixtures thereof.

7. A thermoplastic moulding mass according to any one of claims 4 to 6, characterized in that it has the following composition:
20 to 80% by mass lignin sulfonate(s) or the salts thereof, and mixtures thereof,
10 to 30% by mass plasticizers,
5 to 35% by mass starches,
0 to 40% by mass cellulose derivatives
5 to 40% by mass fillers, as well as optionally
0 to 5% by mass further auxiliary agents.

8. A thermoplastic moulding mass according to any one of claims 3 to 7, characterized in that the fillers are selected from mineral fillers, organic fillers and mixtures thereof.

9. A thermoplastic moulding mass according to claim 8, characterized in that the fillers are selected from talcum, chalk, short-chain cellulose fibers and mixtures thereof.

10. A thermoplastic moulding mass according to any one of claims 3 to 9, characterized in that as a further auxiliary agent, glycerol monostearate is contained as an emulsifier.

11. A thermoplastic moulding mass according to any one of claims 3 to 9, characterized in that as a further auxiliary agent, a cross-linked polyvinylpyrrolidone (Polyplasdone XL) is contained as a disintegrating agent.

12. A dimensionally stable package for toxic or hazardous active substances and active substance concentrates, characterized in that the package is at least partially made of a water-soluble or water-dispersible thermoplastic moulding mass according to any one of claims 1 to 11.

13. A foil package for toxic or hazardous active substances and active substance concentrates, characterized in that the package at least partially consists of a water-soluble or water-dispersible thermoplastic moulding mass according to any one of claims 1 to 11.

## Revendications

1. Composition de moulage thermoplastique soluble dans l'eau ou dispersable dans l'eau, dans chaque cas à base d'un ou de plusieurs lignosulfonates et/ou de leurs dérivés et sels, ainsi que de mélanges contenant ceux-ci, en tant que matière(s) de squelette et plastifiants.

2. Composition de moulage thermoplastique soluble dans l'eau ou dispersable dans l'eau selon la revendication 1, caractérisée en ce qu'elle est à base de lignosulfonates de magnésium et/ou de leurs dérivés et sels, ainsi que de mélanges contenant ceux-ci en tant que matière(s) de squelette et de polyols, d'huiles végétales et de leurs dérivés, de dérivés du type citrates et de dérivés du type phtalates en tant que plastifiants.

3. Composition de moulage thermoplastique selon la revendication 1 ou 2, caractérisée en ce qu'elle présente la composition suivante :
5 à 95 % de la composition en lignosulfonates et/ou en leurs dérivés et sels, ainsi qu'en mélanges de ceux-ci,
5 à 40 % de la composition en plastifiant,
0 à 85 % de la composition en polysaccharides de réserve et/ou polysaccharides de parois cellulaires,
0 à 60 % de la composition en charges, ainsi que, le cas échéant,
0 à 5 % de la composition en autres matériaux auxiliaires.

4. Composition de moulage thermoplastique selon la revendication 3, caractérisée en ce que les polysaccharides de réserve et/ou de parois cellulaires de la composition de moulage thermoplastique sont sélectionnés dans le groupe constitué de dérivés de la cellulose, d'amidon naturel ou modifié et de mélanges de ceux-ci.

5. Composition de moulage thermoplastique selon la revendication 4, caractérisée en ce que les polysaccharides de réserve et/ou de parois cellulaires de la composition de moulage thermoplastique sont sélectionnés dans le groupe constitué de l'hydroxyéthylcellulose, l'hydroxypropylcellulose, l'hydroxypropylméthylcellulose, la méthylcellulose, la méthyléthylcellulose, la méthylhydroxyéthylcellulose, la méthylhydroxypropylcellulose, la carboxyméthylcellulose, la carboxyméthyléthylcellulose, la carboxyméthylhydroxyéthylcellulose, d'amidon partiellement dégradé, d'amidons de pomme de terre, de manioc, de riz, de maïs, de froment et d'autres céréales, de maltodextrines provenant de ces amidons présentant des indices DE de 4 à 20, d'amidons préalablement mis en pâte, d'amidons cationiques, d'amidons acétylés, d'amidons hydroxypropylés et de mélanges de ceux-ci.

6. Composition de moulage thermoplastique selon une des revendications 3 à 5, caractérisée en ce que les polysaccharides de réserve et/ou de parois cellulaires de la composition de moulage thermoplastique sont choisis dans le groupe constitué de maltodextrines présentant des indices DE de 6 à 10, d'amidon séché préalablement mis en pâte, d'hydroxypropylcellulose et de mélanges de ceux-ci.

7. Composition de moulage thermoplastique selon l'une des revendications 4 à 6, caractérisée en ce qu'elle présente la composition suivante :
20 à 80 % de la composition en lignosulfonate(s), ou en leurs sels et en mélanges de ceux-ci,
10 à 30 % de la composition en plastifiant,
5 à 35 % de la composition en amidons,
0 à 40 % de la composition en dérivés de cellulose,
5 à 40 % de la composition en charges ainsi que, le cas échéant,
0 à 5 % de la composition en autres matières auxiliaires.

8. Composition de moulage thermoplastique selon l'une des revendications 3 à 7, caractérisée en ce que les charges sont choisies parmi des charges minérales, des charges organiques et des mélanges de celles-ci.

9. Composition de moulage thermoplastique selon la revendication 8, caractérisée en ce que les charges sont choisies parmi le talc, la craie, des fibres de cellulose à chaîne courte, et des mélanges de ceux-ci.

10. Composition de moulage thermoplastique selon l'une des revendications 3 à 9, caractérisée en ce qu'en tant qu'autre matière auxiliaire, la composition contient du monostéarate de glycérol, en tant qu'émulsionnant.

11. Composition de moulage thermoplastique selon l'une des revendications 3 à 9, caractérisée en ce qu'en tant que matière auxiliaire, la composition contient une polyvinylpyrrolidone réticulée transversalement (Polyplasdone XL), en tant que moyen de rupture.

12. Emballage de forme stable pour substances actives toxiques ou dangereuses et pour concentrés de substances actives, caractérisé en ce que l'emballage est constitué au moins partiellement d'une composition de moulage thermoplastique soluble dans l'eau ou dispersable dans l'eau selon une des revendications 1 à 11.

13. Emballage en feuille mince pour substances actives ou dangereuses et pour concentrés de substances actives, caractérisé en ce que l'emballage est constitué au moins partiellement d'une composition de moulage thermoplastique soluble dans l'eau ou dispersable dans l'eau, selon une des revendications 1 à 11.
